# EUROPÄISCHE PATENTANMELDUNG

(11) **EP 2 848 392 A1**
(43) Veröffentlichungstag der Anmeldung: **18.03.2015**
(21) Anmeldenummer: 13183899.7
(22) Anmeldetag: 11.09.2013
(51) Int. Cl.: B29C 67/00, B22F 3/105

(54) **Verfahren zur Qualitätssicherung von durch generative Fertigungsprozesse hergestellten Bauteilen sowie Anlage**

(71) Anmelder: Siemens Aktiengesellschaft, 80333 München (DE)
(72) Erfinder: Ott, Michael, 45470 Mülheim an der Ruhr (DE)

(57) **Zusammenfassung**

Die Erfindung betrifft ein Verfahren nach dem Oberbegriff des Anspruchs 1, wobei
- in einem ersten Schritt eine Scananlage mit einem Scan die Festschicht zumindest in einer Festhöhe als ein erstes Ist-Datenmodell erfasst, wobei anschließend das so erfasste erste Ist-Datenmodell mit einem Soll-Datenmodell abgeglichen wird, und wobei bei einer vorgegebenen Differenz zwischen erstem Ist-Datenmodell und Soll-Datenmodell ein Alarm ausgegeben wird,
- bei Ausbleiben des Alarms in einem zweiten Schritt nach Auftragen einer Pulverschicht mit einer Pulverhöhe auf eine Festschicht mit einer Festhöhe mittels einer Vorrichtung, die Festschicht als auch die aufgetragene Pulverschicht zumindest in ihrer Gesamthöhe durch die Scananlage mit dem Scan als ein zweites Ist-Datenmodell erfasst wird, und anschließend das so erfasste zweite Ist-Datenmodell mit dem Soll-Datenmodell abgeglichen wird, und wobei bei einer vorgegebenen Differenz zwischen zweitem Ist-Datenmodell und Soll-Datenmodell ein Alarm ausgegeben wird.

Zudem betrifft die Erfindung eine Anlage.

## Beschreibung

Die Erfindung betrifft ein Verfahren zur Qualitätssicherung von durch generative Fertigungsprozesse hergestellten Bauteilen, umfassend ein Soll-Datenmodell, anhand dessen das herzustellende Bauteil aus einer Vielzahl von Schichten gebildet werden soll, und zumindest eine Pulverschicht mit einer Pulverhöhe, welche mittels einer Vorrichtung auf zumindest einer Festschicht mit einer Festhöhe aufgetragen wird, wobei die Pulverschicht mit der Pulverhöhe anschließend mittels eines ersten Strahls durch eine erste Strahlanlage auf dieser Festschicht zu einer neuen Festschicht mit einer neuen Festhöhe fixiert wird sowie eine Anlage.

Generative Fertigungsverfahren werden durch ihr iteratives Auf- oder Aneinanderfügen von Schicht- oder Volumenelementen zur Herstellung dreidimensionaler Gegenstände eingesetzt, und finden ihre Anwendung im Bereich der Herstellung von Prototypen sowie inzwischen auch in der Bauteilherstellung, insbesondere bei der Anfertigung individuell geformter Bauteile. Als Ausgangsmaterialien steht eine Vielzahl unterschiedlicher Werkstoffe zur Verfügung, die sowohl in Pulver- oder Granulatform, aber auch in Form von Fluiden bspw. als Suspensionen, vorliegen können. Bei generativen Herstellungsverfahren wird der dreidimensionale Gegenstand durch eine Vielzahl einzelner Materialschichten, die auf einer absenkbaren Bauplattform nacheinander abgeschieden und anschließend einzeln einem lokal selektiven Verfestigungsprozess unterzogen werden, gebildet.

Zur Darstellung eines Bauteiles mittels Selectiven Laser Meltings (SLM) wird ein Pulverbett mittels eines Laserstrahls gemäß einem vorgegebenen Belichtungsfile belichtet, bei dem die Daten aus einem 3D-CAD-File erzeugt werden. Im ersten Berechnungsschritt wird das Bauteil in einzelne Schichten unterteilt. Im zweiten Berechnungsschritt werden für jede Schicht die Bahnen (Vektoren) erzeugt, die der Laserstrahl abfährt.

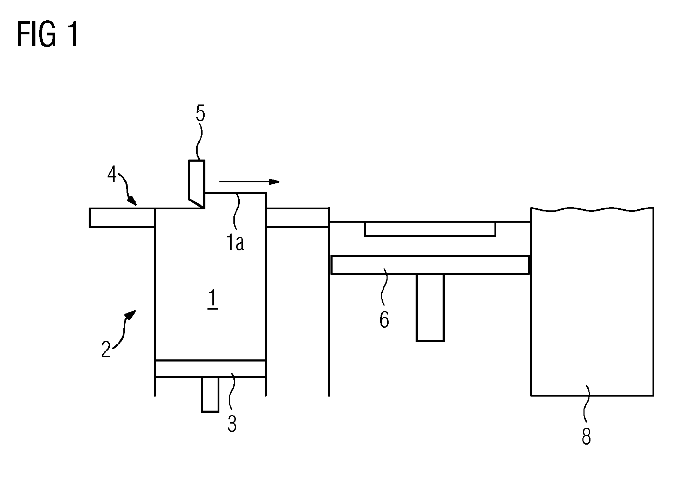

Ist eine Pulverschicht belichtet, so wird die Bauplattform abgesenkt und eine neue Schicht Pulver mittels eines Schiebers, beispielsweise eines Rechens aufgebracht und dann erneut mit dem Laser und mithilfe des Belichtungsfiles belichtet. Die später beschriebene FIG 1 zeigt beispielhaft eine solche Fertigungsanlage.

Je nach Energieeintrag und Design des Bauteils kann es zur Ausbildung von Eigenspannungen im Bauteil kommen, die zu einer Verformung des Bauteils führen, so dass Teile des Bauteiles über das Pulverbett hinaus ragen. Wird die Höhendifferenz höher als die neue Pulverschicht, so kann es zu einer Kollision mit dem Rechen kommen. Dadurch wird der Rechen beschädigt und der Belichtungsprozess muss für eine Reparatur unterbrochen werden. Ggf. muss das bis dahin entstandene Bauteil sogar verschrottet werden.

Daneben unterliegt der Rechen, der beispielsweise aus einer Metallleiste, Metallbürste oder einer Silikonlippe bestehen kann, durch die Reibung mit den Pulverpartikeln einem Verschleiß. Dies kann zu Höhendifferenzen im Pulverbett führen, was zu Abweichungen in der Maßhaltigkeit des Bauteils führen kann. Alternativ oder zusätzlich kann eine Höhendifferenz Anlass zur Ausbildung von lokalen Eigenspannungen führen, welche maßliche Abweichungen zur Folge haben können. Daneben können durch lokal abweichende Wärmeableitungsbedingungen Höhenunterschiede allerdings auch zu Veränderungen der Mikrostruktur im Bauteil führen. Dies kann eine lokale Veränderung der Materialeigenschaften hervorrufen. Eigenspannungen im Bauteil, die zu Verformungen führen, können derzeit nur ungenau durch visuelle Kontrolle erfasst werden. Der Verschleiß des Rechens wird durch Kontrollen in bestimmten Zeitabständen erfasst, dies bedingt allerdings Personaleinsatz.

Eine erste Aufgabe der Erfindung ist daher, die Angabe eines Verfahrens zur Qualitätssicherung von durch generative Fertigungsprozesse hergestellten Bauteilen, welches das oben genannte Problem verhindert. Eine weitere Aufgabe der Erfindung ist es, eine Anlage zur Qualitätssicherung von durch generative Fertigungsprozesse hergestellten Bauteilen anzugeben, welche das oben genannte Problem verhindert.

Die erste Aufgabe wird die durch die Angabe eines Verfahrens zur Qualitätssicherung von durch generative Fertigungsprozesse hergestellten Bauteilen gelöst. Dabei umfasst das Verfahren ein Soll-Datenmodell, anhand dessen das herzustellende Bauteil aus einer Vielzahl von Schichten gebildet werden soll, und zumindest eine Pulverschicht mit einer Pulverhöhe, welche mittels einer Vorrichtung auf zumindest einer Festschicht mit einer Festhöhe aufgetragen wird, wobei die Pulverschicht mit der Pulverhöhe anschließend mittels eines ersten Strahls durch eine erste Strahlanlage auf dieser Festschicht zu einer neuen Festschicht mit einer neuen Festhöhe fixiert wird. Erfindungsgemäß erfasst in einem ersten Schritt eine Scananlage mit einem Scan die Festschicht zumindest in der Festhöhe als ein erstes Ist-Datenmodell. Dabei wird anschließend das so erfasste erste Ist-Datenmodell mit dem Soll-Datenmodell abgeglichen. Bei einer vorgegebenen Differenz zwischen erstem Ist-Datenmodell und Soll-Datenmodell wird ein Alarm ausgegeben. Bei Ausbleiben des Alarms wird erfindungsgemäß in einem zweiten Schritt nach Auftragen der Pulverschicht mit der Pulverhöhe auf die Festschicht mit der Festhöhe mittels der Vorrichtung, die Festschicht als auch die aufgetragene Pulverschicht zumindest in ihrer Gesamthöhe durch die Scananlage mit dem Scan als ein zweites Ist-Datenmodell erfasst, und anschließend das so erfasste zweite Ist-Datenmodell mit dem Soll-Datenmodell abgeglichen. Bei einer vorgegebenen Differenz zwischen zweitem Ist-Datenmodell und Soll-Datenmodell wird ein Alarm ausgegeben.

Dies bedeutet, dass neben der Strahlanlage zur Belichtung, d.h. Bestrahlung des Pulverbetts, nun eine Scananlage in die Fertigungsanlage integriert wird. Diese Scananlage dient zur Messung der Masse des Pulverbettes und des darin befindlichen Bauteiles.

Schritt 1 erfolgt unmittelbar nach der ersten Belichtung des Pulverbettes. Hier nimmt die Scananlage zumindest die Festhöhe des belichteten Bereichs, d.h. der bereits gefestigten Festschicht auf und vergleicht die Masse, d.h. das Ist-Datenmodell mit dem Soll-Datenmodel. Dabei kann das Soll-Datenmodell ein 2D-Belichtungsfile sein, welches aus dem dreidimensionalen CAD-Modell gewonnen wird. Entstehen Abweichungen, insbesondere in der z-Ebene, d.h. über die Höhe der neuen Festschicht hinaus, so kann verhindert werden, dass die Vorrichtung, z.B. nachfolgend der einfachheitshalber als ein Schieber oder Rechen bezeichnet, mit dem Bauteil kollidiert, indem ein Alarm ausgelöst und eine erneute Pulververteilung mittels des Rechens gestoppt wird. Schritt zwei erfolgt unmittelbar nach dem Durchgang des Rechens, wenn kein Alarm ausgelöst worden ist. Hier stellt ein Scan der Gesamthöhe durch einen Abgleich mit dem Belichtungsfile sicher, dass keine Höhendifferenzen durch das Auftragen des Pulvers im Pulverbett entstanden sind, insbesondere am Ort der nächsten Belichtung, die Anlass zu Abweichungen im Hinblick auf die Mikrostruktur oder die Wärmeableitungsbedingungen geben. Die Erfindung ermöglicht eine Kombination von Strahlanlage und Scananlage in einer Anlage um eine in situ Prozesskontrolle zu ermöglichen. Somit können Schäden am Equipment vermieden werden, und Werkzeugverschleiß, insbesondere am Rechen, frühzeitig erkannt werden. Insbesondere können Abweichungen und in der Nachverfolgung potentielle Abweichungen frühzeitig erkannt werden, mit der Möglichkeit diese in späteren Prozessen direkt einem Ort zuordnen zu können.

Zudem wird nicht geschmolzenes Pulver bei beispielsweise einem SLM-Verfahren üblicherweise entfernt und nach dem Sieben für das nächste SLM-Verfahren wiederverwendet. Daraus resultierenden Verklumpungen können mit den obigen Verfahren erkannt werden, bevor beispielsweise der Rechen beschädigt wird. Auch können Fehler durch beispielsweise einen fehlerhaften Rechen vermieden werden.

Bevorzugt wird in dem ersten Schritt durch die Scananlage mit dem Scan die Festschicht zusätzlich in der Festbreite und/oder Festlänge als ein erstes Ist-Datenmodell erfasst. In einem weiteren bevorzugten Ausführungsbeispiel wird in dem zweiten Schritt die Festschicht als auch die aufgetragene Pulverschicht zusätzlich in der Gesamtbreite und/oder Gesamtlänge durch die Scananlage mit dem Scan als ein zweites Ist-Datenmodell erfasst. Dies sichert eine gleichmäßige Beschichtung bzw. gleichmäßigen Pulveraufbau. Dadurch ist das Verfahren auch zu Wiederbeschichtungen (re-coating) einsetzbar. Bevorzugt scannt die Scananlage die erste Festhöhe und/oder die Gesamthöhe in zwei diskreten Schritten ab. Somit kann das entstandene Ist-Modell sehr einfach mit dem generierten Soll-Datenmodell verglichen werden.

Bevorzugt wird bei Auslösen des Alarms das Verfahren angehalten. Auch andere/weitere Maßnahmen sind jedoch vorstellbar. So könnte zum Beispiel die aufgetragene Pulverschicht wieder entfernt und nochmals aufgetragen werden.

Bevorzugt wird das generative Fertigungsverfahren mit unterschiedlichen Verfahrensparametern durchgeführt, wobei bei Auslösen des Alarms zumindest einer dieser Verfahrensparameter geändert wird. Dabei können die Verfahrensparameter beispielsweise die Schichtdicke der aufgeschmolzenen Schichten, die Scangeschwindigkeit des Strahls und Spurabstand des Strahls sein.

Die auf die Anlage bezogene Aufgabe wird gelöst durch die Angabe einer Anlage zur Qualitätssicherung von mittels generativen Fertigungsprozesses hergestellten Bauteilen, umfassend ein Soll-Datenmodell, anhand dessen das herzustellende Bauteil aus einer Vielzahl von Schichten gebildet werden soll. Die Anlage umfasst zumindest eine Pulverschicht mit einer Pulverhöhe, welche mittels einer Vorrichtung auf zumindest einer Festschicht mit einer Festhöhe auftragbar ist, wobei die Pulverschicht mit der Pulverhöhe anschließend mittels eines ersten Strahls durch eine erste Strahlanlage auf dieser Festschicht zu einer neuen Festschicht mit einer neuen Festhöhe fixierbar ist. Erfindungsgemäß ist eine Scananlage mit einem Scan vorgesehen, zur Erfassung der Festschicht zumindest in der Festhöhe als ein erstes Ist-Datenmodell in einem ersten Schritt, und wobei ein anschließender Abgleich zwischen dem so erfassten ersten Ist-Datenmodell mit dem Soll-Datenmodell vorgesehen ist, und wobei bei einer vorgegebenen Differenz zwischen erstem Ist-Datenmodell und Soll-Datenmodell ein Alarm ausgebbar ist. Erfindungsgemäß ist bei Ausbleiben des Alarms in einem zweiten Schritt nach Auftragen der Pulverschicht mit der Pulverhöhe auf die Festschicht mit der Festhöhe mittels einer Vorrichtung, die Festschicht als auch die aufgetragene Pulverschicht zumindest in ihrer Gesamthöhe durch die Scananlage mit dem Scan als ein zweites Ist-Datenmodell erfassbar. Anschließend ist ein Abgleich zwischen dem so erfassten zweiten Ist-Datenmodell mit dem Soll-Datenmodell vorgesehen, wobei bei einer vorgegebenen Differenz zwischen zweitem Ist-Datenmodell und Soll-Datenmodell ein Alarm ausgebbar ist.

Die Vorteile des Verfahrens können auch auf die Anlage übertragen werden. Insbesondere ist die Anlage dazu geeignet, das oben beschriebene Verfahren durchzuführen.

Bevorzugt ist als Vorrichtung ein Schieber vorgesehen. Dies kann insbesondere ein Rechen sein.

Bevorzugt ist die erste Strahlanlage ein erster Laser. In bevorzugter Ausgestaltung ist die Scananlage ein zweiter Laser. Bevorzugt weisen der erste Laser und der zweite Laser unterschiedliche Wellenlängen auf. Auch können sie unterschiedliche Strahldurchmesser und Abstände zum herzustellenden Bauteil aufweisen.

Bevorzugt ist das Soll-Datenmodell ein 2D-Belichtungsfile, welches aus einem dreidimensionalen CAD-Modell mittels Software erzeugbar ist. Dazu wird das herzustellende Bauteil in einzelne Schichten unterteilt und für jede der Schichten ein Soll-Vektor erzeugt, die der Strahl abfährt. Da der Scanlaser das Pulverbett des zu fertigenden Bauteils im Fertigungsprozess ebenfalls in zwei diskreten Schritten scannt, kann der so erzeugte Ist-Vektor vereinfacht mit dem Soll-Vektor verglichen werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: Fertigungsanlage nach dem Stand der Technik für ein SLM Verfahren nach dem Stand der Technik;
- FIG 2:: schematisch das erfindungsgemäße Verfahren.

FIG 1 zeigt eine Fertigungsanlage an welcher SLM-Verfahren nach dem Stand der Technik durchgeführt werden können. Zur Bevorratung des zumeist in Pulver- oder Granulatform vorliegenden Materials 1 dient ein Materialbehälter 2, das aus einem nach oben offen ausgebildeten Behältnis besteht, dessen Boden 3 schrittweise nach oben verfahrbar ist. Durch geeignete Einstellung des Behältnisbodens 3 überragt eine in der Schichtdicke vorgebbare Materialschicht 1a eine obere Abscheideebene 4, die sich unmittelbar an der oberen Behältnisöffnung des Materialbehälters 2 anschließt. Mit Hilfe eines Rechens 5 wird die die Abscheideebene 4 überragende Materialschicht 1a abgestreift und in Bewegungsrichtung des Rechens 5 zu einer sich unmittelbar rechts anschließenden Bauplattform 6 geschoben. Die Bauplattform 6 ist gleichfalls absenkbar gelagert und relativ zur Abscheideebene 4 derart abgesenkt, so dass das von dem Schieber 5 mitgeführte Material in den schichtförmigen Bauraum zwischen der Abscheideebene 4 und der zuoberst auf der Bauplattform 6 bereits abgeschiedenen Materialschicht gleichmäßig zu einem Pulverbett verteilt aufgetragen werden kann. Rechts an der Bauplattform befindet sich ein Auffangbehälter 8, in den das überschüssige Material von dem Rechen 5 eingebracht wird, das sich für eine Wiederverwendung eignet. Auch das in dem Bauraum nicht verwendete Material 1 kann gesiebt und weiterverwendet werden. Bei ungenügender Siebung kann es jedoch hier zur Bildung von Materialklumpen kommen.

Je nach Energieeintrag und Design des Bauteils kann es zur Ausbildung von Eigenspannungen im Bauteil kommen, die zu einer Verformung des Bauteils führen, so dass Teile des Bauteiles über das Pulverbett hinaus ragen. Wird die Höhendifferenz höher als die neue Pulverschicht, so kann es zu einer Kollision mit dem Rechen 5 kommen. Dadurch wird der Rechen 5 beschädigt und der Belichtungsprozess muss für eine Reparatur unterbrochen werden. Ggf. muss das bis dahin entstandene Bauteil sogar verschrottet werden.

Daneben unterliegt der Rechen 5, welcher beispielsweise aus einer Metallleiste, Metallbürste oder einer Silikonlippe besteht, durch die Reibung mit den Pulverpartikeln einem Verschleiß. Dies kann zur Höhendifferenzen im Pulverbett führen, was zu Abweichungen in der Maßhaltigkeit des Bauteils führen kann. Alternativ kann eine Höhendifferenz Anlass zur Ausbildung von lokalen Eigenspannungen führen, die maßliche Abweichungen zur Folge haben. Daneben können durch lokal abweichende Wärmeableitungsbedingungen entstehende Höhenunterschiede allerdings auch zu Veränderungen der Mikrostruktur im Bauteil führen. Dies kann zu einer lokalen Veränderung der Materialeigenschaften führen. Hier greift nun die Erfindung ein.

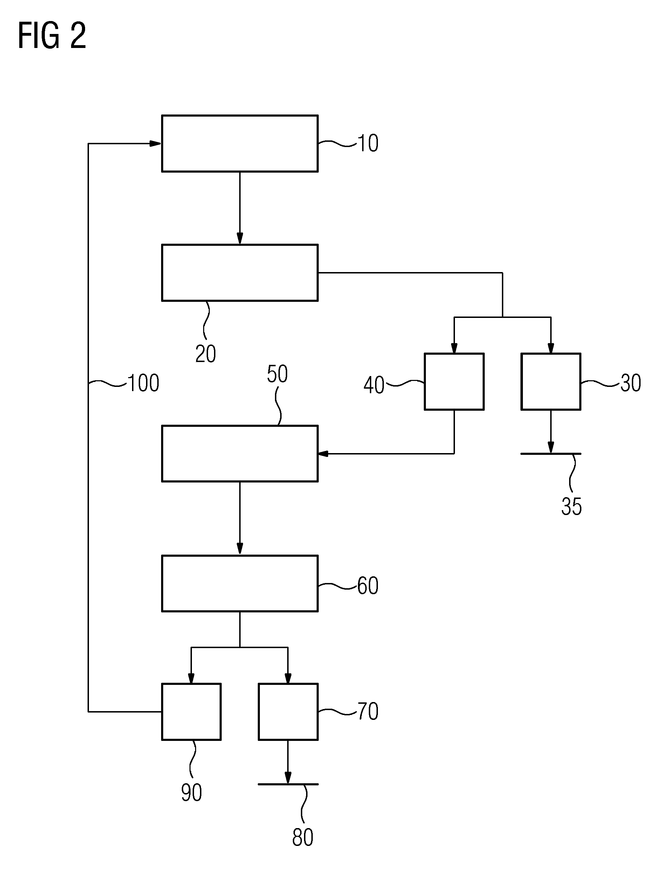

FIG 2 zeigt sehr schematisch das erfindungsgemäße Verfahren. Zunächst wird aus dem 3D-CAD File ein 2D Belichtungsfile erzeugt. Dieses kann als Soll-Datenmodell herangezogen werden. Dazu wird das herzustellende Bauteil in einzelne Schichten unterteilt und für jede Schicht die notwendigen Daten (Schichtdicke, Laserstrahldurchmesser) als auch die Bahnen (Vektoren) erzeugt, die der Laserstrahl später auf dem Pulverbett abfährt. Nun wird die erste Schicht gemäß dem 2D File erzeugt und durch einen hochenergetischen Laserstrahl zu einer Festschicht mit einer ersten Festhöhe gefestigt 10. Eine Scananlage, z.B. eine zweiter Laser, scannt nun diese Festschicht mit der Festhöhe ab und erzeugt ein erstes Ist-Datenmodell. Zusätzlich zur Festhöhe kann das erste Ist-Datenmodell auch die Festbreite und die Festlänge beinhalten, das heißt die gesamte Kontur der erzeugten Festschicht. Dadurch kann später auch sichergestellt werden, dass das Bauteil auch bezogen auf die Bauteillänge und die Bauteilbreite innerhalb der Toleranzen liegt. Nun wird das erste Ist-Datenmodell mit dem Belichtungsfile verglichen 20. Bei einer vorgegebenen, nicht tolerierbaren Differenz zwischen erstem Ist-Datenmodell und Soll-Datenmodell wird ein Alarm ausgegeben 30. Dies kann beispielsweise dazu führen, dass das Verfahren sofort gestoppt wird 35. Gleichzeitig oder alternativ können auch die Verfahrensparameter geändert werden. Dadurch wird verhindert, dass beim Auftragen einer neuen Pulverschicht auf die bereits gefestigte Festschicht, beispielsweise der Rechen 5(FIG 1) durch in der Höhe hervorstechende Materialklumpen beschädigt wird. Dies ist insbesondere dann der Fall wenn die Materialklumpen höher als die neu aufzutragende Pulverschicht sind. Liegt die Differenz im tolerierbaren Bereich 40, so wird mit dem Rechen 5 (FIG 1) eine neue Pulverschicht mit einer Pulverhöhe gemäß dem Soll-Datenmodell aufgetragen. Das heißt, es wird ein neues Pulverbett erzeugt 50. In einem zweiten Schritt wird nun mit der Scananlage diese erzeugte, noch nicht gefestigte Pulverschicht gescannt, bzw. abgetastet. Das so erzeugte zweite Ist-Datenmodell wird mit dem dafür bestimmten Soll-Datenmodell verglichen 60. Durch diesen Abgleich mit dem Belichtungsfile wird nun sichergestellt, dass keine Höhendifferenzen im Pulverbett entstanden sind, insbesondere am Ort der nächsten Belichtung, die Anlass zu Abweichungen im Hinblick auf die Mikrostruktur oder die Wärmeableitungsbedingungen geben. Liegt die Differenz zwischen zweitem Ist-Datenmodell und Solldatenmodell im nicht tolerierbaren Bereich 70, so wird das Verfahren gestoppt 80. Gleichzeitig oder alternativ können auch die Verfahrensparameter geändert werden. Liegt die Differenz im tolerierbaren Bereich 90, so wird das Pulverbett gemäß dem Soll-Belichtungsfile bestrahlt und somit eine neue Festschicht mit einer neuen Festhöhe erzeugt. Anschließend startet das Verfahren erneut 100, bis beispielsweise das Verfahren wegen nicht tolerierbarer Abweichungen gestoppt wird oder bis das Bauteil fertiggestellt worden ist.

Durch das erfindungsgemäße Verfahren wird nun eine in situ Prozesskontrolle ermöglicht. Der Vorteil liegt in der Vermeidung von Schäden am Equipment, in der frühzeitigen Erkennung von Werkzeugverschleiß (Rechen), im frühzeitigen Erkennen von Abweichungen und in der Nachverfolgung von potentiellen Abweichungen, mit der Möglichkeit diese in späteren Prozessen direkt einem Ort zuordnen zu können.

## Patentansprüche

1. Verfahren zur Qualitätssicherung von durch generative Fertigungsprozesse hergestellten Bauteilen, umfassend ein Soll-Datenmodell, anhand dessen das herzustellende Bauteil aus einer Vielzahl von Schichten gebildet werden soll, und zumindest eine Pulverschicht mit einer Pulverhöhe, welche mittels einer Vorrichtung auf zumindest einer Festschicht mit einer Festhöhe aufgetragen wird, wobei die Pulverschicht mit der Pulverhöhe anschließend mittels eines ersten Strahls durch eine erste Strahlanlage auf dieser Festschicht zu einer neuen Festschicht mit einer neuen Festhöhe fixiert wird,
**dadurch gekennzeichnet, dass**
- in einem ersten Schritt eine Scananlage mit einem Scan die Festschicht zumindest in der Festhöhe als ein erstes Ist-Datenmodell erfasst, wobei anschließend das so erfasste erste Ist-Datenmodell mit dem Soll-Datenmodell abgeglichen wird, und wobei bei einer vorgegebenen Differenz zwischen erstem Ist-Datenmodell und Soll-Datenmodell ein Alarm ausgegeben wird,
- bei Ausbleiben des Alarms in einem zweiten Schritt nach Auftragen der Pulverschicht mit der Pulverhöhe auf die Festschicht mit der Festhöhe mittels einer Vorrichtung, die Festschicht als auch die aufgetragene Pulverschicht zumindest in ihrer Gesamthöhe durch die Scananlage mit dem Scan als ein zweites Ist-Datenmodell erfasst wird, und anschließend das so erfasste zweite Ist-Datenmodell mit dem Soll-Datenmodell abgeglichen wird, und wobei bei einer vorgegebenen Differenz zwischen zweitem Ist-Datenmodell und Soll-Datenmodell ein Alarm ausgegeben wird.

2. Verfahren zur Qualitätssicherung nach Anspruch 1,
**dadurch gekennzeichne**t, **dass** in dem ersten Schritt durch die Scananlage mit dem Scan die Festschicht zusätzlich in der Festbreite und/oder Festlänge als ein erstes Ist-Datenmodell erfasst wird.

3. Verfahren zur Qualitätssicherung nach Anspruch 1 oder 2, **dadurch gekennzeichne**t, **dass** in dem zweiten Schritt die Festschicht als auch die aufgetragene Pulverschicht zusätzlich in der Gesamtbreite und/oder Gesamtlänge durch die Scananlage mit dem Scan als ein zweites Ist-Datenmodell erfasst werden.

4. Verfahren zur Qualitätssicherung nach einem der vorhergehenden Ansprüchen,
**dadurch gekennzeichne**t, **dass** die Scananlage die Festhöhe und/oder die Gesamthöhe in zwei diskreten Schritten abscannt.

5. Verfahren zur Qualitätssicherung nach einem der vorhergehenden Ansprüchen,
**dadurch gekennzeichne**t, **dass** bei Auslösen des Alarms das Verfahren angehalten wird.

6. Verfahren zur Qualitätssicherung nach einem der vorhergehenden Ansprüchen,
**dadurch gekennzeichnet, das** das generative Fertigungsverfahren mit unterschiedlichen Verfahrensparametern durchgeführt wird und bei Auslösen des Alarms zumindest einer dieser Verfahrensparameter geändert wird.

7. Anlage zur Qualitätssicherung von mittels generativen Fertigungsprozesses hergestellten Bauteilen, umfassend ein Soll-Datenmodell, anhand dessen das herzustellende Bauteil aus einer Vielzahl von Schichten gebildet werden soll, und zumindest eine Pulverschicht mit einer Pulverhöhe, welche mittels einer Vorrichtung auf zumindest eine Festschicht mit einer Festhöhe auftragbar ist, wobei die Pulverschicht mit der Pulverhöhe anschließend mittels eines ersten Strahls durch eine erste Strahlanlage auf dieser Festschicht zu einer neuen Festschicht mit einer neuen Festhöhe fixierbar ist,
**dadurch gekennzeichne**t, **dass**
- eine Scananlage mit einem Scan vorgesehen ist, zur Erfassung der Festschicht zumindest in der Festhöhe als ein erstes Ist-Datenmodell in einem ersten Schritt, und wobei ein anschließender Abgleich zwischen dem so erfassten ersten Ist-Datenmodell mit dem Soll-Datenmodell vorgesehen ist, und wobei bei einer vorgegebenen Differenz zwischen erstem Ist-Datenmodell und Soll-Datenmodell ein Alarm ausgebbar ist,
- bei Ausbleiben des Alarms in einem zweiten Schritt nach Auftragen der Pulverschicht mit der Pulverhöhe auf die Festschicht mit der Festhöhe mittels einer Vorrichtung, die Festschicht als auch die aufgetragene Pulverschicht zumindest in ihrer Gesamthöhe durch die Scananlage mit dem Scan als ein zweites Ist-Datenmodell erfassbar ist, wobei ein anschließender Abgleich zwischen dem so erfassten zweitem Ist-Datenmodell mit dem Soll-Datenmodell vorgesehen ist, und wobei bei einer vorgegebenen Differenz zwischen zweitem Ist-Datenmodell und Soll-Datenmodell ein Alarm ausgebbar ist.

8. Anlage zur Qualitätssicherung nach Anspruch 7,
**dadurch gekennzeichne**t, **dass** als Vorrichtung ein Schieber vorgesehen ist.

9. Anlage zur Qualitätssicherung nach einem der vorhergehenden Ansprüchen 7-8,
**dadurch gekennzeichne**t, **dass** die erste Strahlanlage ein erster Laser ist.

10. Anlage zur Qualitätssicherung nach einem der vorhergehenden Ansprüchen 7-9,
**dadurch gekennzeichne**t, **dass** die Scananlage ein zweiter Laser ist.

11. Anlage zur Qualitätssicherung nach den vorhergehenden Ansprüchen 9 und 10,
**dadurch gekennzeichne**t, **dass** der erste Laser und der zweite Laser unterschiedliche Wellenlängen aufweisen.

12. Anlage zur Qualitätssicherung nach einem der vorhergehenden Ansprüchen 7-11,
**dadurch gekennzeichne**t, **dass** das Soll-Datenmodell ein 2D-Belichtungsfile ist, welches aus einem dreidimensionalen CAD-Modell mittels Software erzeugbar ist.
